# EUROPEAN PATENT SPECIFICATION

(11) **EP 2 626 932 B1**
(45) Date of publication and mention of the grant of the patent: **28.05.2014**
(21) Application number: 12177113.3
(22) Date of filing: 19.07.2012
(51) Int. Cl.: H01M 4/48, H01M 4/04, H01M 10/0525, H01M 4/36, B01J 21/08

(54) **Negative active material for rechargeable lithium battery, method of preparing the same and rechargeable lithium battery including the same**
Negativ-Aktivmaterial für eine wiederaufladbare Lithiumbatterie, Herstellungsverfahren dafür und wiederaufladbare Lithiumbatterie damit
Matériau actif négatif pour batterie au lithium rechargeable, procédé de préparation de celui-ci et batterie au lithium rechargeable comprenant celui-ci

(30) Priority: 13.02.2012 US 201261598188 P; 17.07.2012 US 201213551548
(43) Date of publication of application: 14.08.2013
(73) Proprietor: Samsung SDI Co., Ltd., Gyeonggi-do (KR)
(72) Inventor: Park, Sang-Eun, Gyeonggi-do (KR); Kim, Young-Ugk, Gyeonggi-do (KR)
(74) Representative: Russell, Tim

(56) References cited:
- EP-A1- 1 986 253
- US-A1- 2006 099 507
- US-A1- 2010 119 948
- YAN YAO ET AL: "Interconnected Silicon Hollow Nanospheres for Lithium-Ion Battery Anodes with Long Cycle Life", NANO LETTERS, vol. 11, no. 7, 13 July 2011 (2011-07-13), pages 2949-2954, XP055046276, ISSN: 1530-6984, DOI: 10.1021/nl201470j

## Description

The present invention relates to a negative active material for a rechargeable lithium battery, a method of preparing the same, and a rechargeable lithium battery including the negative active material.

A lithium rechargeable battery has recently drawn attention as a power source for a small portable electronic device. It uses an organic electrolyte solution and thereby has twice the discharge voltage of a conventional battery using an alkali aqueous solution and as a result, has high energy density.

For positive active materials of a rechargeable lithium battery, lithium-transition element composite oxides being capable of intercalating lithium, such as LiCoO₂, LiMn₂O₄, LiNi₁ₓCoₓO₂ (0<x<1), and so on, have been researched.

As for negative active materials of a rechargeable lithium battery, various carbon-based materials such as artificial graphite, natural graphite, and hard carbon, which may intercalate and deintercalate lithium ions have been used. However, recently there has been research into non-carbon-based negative active materials such as Si in accordance with need for stability and high-capacity.

Yao et al. 'Interconnected silicon hollow nanospheres for lithium-ion battery anodes with long cycle life'; Nano Letters, 11(7) 2011, 2949-2954 discloses the preparation of an interconnected Si hollow nanosphere electrode and investigation of volume expansion of the single hollow spheres before and after lithiation.

US2006/0099507 discloses a negative electrode for a lithium ion secondary battery comprising an active material layer containing silicon and oxygen. In the thickness direction of the active material layer, an oxygen ratio of the active material is greater at the side of the active material layer in contact with the current collector than at the side of the active material layer not in contact with the current collector.

US2010/0119948 discloses a negative electrode for a lithium secondary battery including a current collector and an active material layer formed on the current collector. The active material layer includes a plurality of negative-electrode active material members disposed on the current collector. Each negative-electrode active material member is oxide, including a first region of relatively high oxygen concentration and a plurality of second regions having an oxygen concentration which is lower that that of the first region.

EP1986253 discloses an electrode for a non-aqueous electrolyte secondary battery including: a current collector; a first active material layer formed on the current collector; and a second active material layer provided on the first active material layer, the second active material layer including a plurality of active material particles. The plurality of active material particles is mainly of a chemical composition represented as SiOₓ (0≤X<1.2).

According to a first aspect of the invention there is provided a negative active material for a rechargeable lithium battery comprising silicon oxide particles represented by formula 1:

SiOₓ, formula 1

in which 0 < x < 2 wherein the silicon oxide particles exhibit an atomic concentration gradient from the surface of the particle to the centre of the particle such that the atomic concentration of silicon is decreased as a function of the depth from the surface of the particle to the centre of the particle; wherein the distance from the surface of the particle to the depth at which the atomic concentration of silicon is 55% ranges from 2 to 20% of the particle diameter.

The concentration gradient is such that the atomic% concentration of the silicon (Si) element is decreased according to a depth from the surface of each particle to the center of the particle, and the atomic % concentration of the oxygen (O) element is increased.

In an embodiment of the invention, in an atom% concentration graph of the silicon (Si) element according to the depth, the integral value of the atomic % concentration of the silicon (Si) element from the surface where the depth is o to a depth where the concentration of the silicon (Si) element is 55 atomic % ranges from about 5,000 to about 40,000 nm·atomic%.

A negative active active material according to the present invention may improve high-capacity and cycle-life characteristics of a rechargeable lithium battery.

The silicon oxide particles may have an amount ratio of a silicon (Si) element to an oxygen (O) element where the x value of SiOx ranges from about 0.5 and about 1.5.

The silicon oxide particles may include crystalline silicon and non-crystalline silicon oxide.

The concentration of crystalline silicon (Si) may be increased toward the surface of the particles.

The distance from the surface of the particle to the depth at which the concentration of silicon is 55 atomic % may range from 100 nm to 1000 nm.

The average particle diameter of the silicon oxide particles may be from about 0.1 µm to about 100 µm.

The particles may include pores.

The negative active material may further include one selected from an alkali metal, an alkaline-earth metal, Group 13 to Group 16 elements, a transition element, a rare earth element, and a combination thereof.

The negative active material for a rechargeable lithium battery may have an average particle diameter of about 0.1µm to about 100µm.

The silicon oxide particles may have a BET specific surface area of about 10 to about 500 m²/g.

According to another aspect of the present invention, a rechargeable lithium battery including a negative electrode including the negative active material; a positive electrode including a positive active material; and a non-aqueous electrolyte is provided.

According to another aspect of the present invention, a method of preparing a negative active material for a rechargeable lithium battery includes:
heat-treating silicon oxide in an inert atmosphere to form silicon oxide particles; dispersing the silicon oxide particles in a solvent to prepare a mixed solution; and adding an etchant to the mixed solution.

The etchant may be added to the mixed solution at a flow rate of 0.05 to 5 ml/min.

The etchant may be added in such a manner that the mole ratio of the silicon oxide in the mixed solution to the total amount of the etchant is from about 10 : 1 to about 1 : 10.

The etchant may be a compound including an acid solution or F ions, or a combination thereof.

The etchant may be added to the mixed solution in the form of a mixture with an additional solvent. The etchant may be added in such a manner that the volume ratio of the sum of the volume of the solvent in which the silicon oxide particles are dispersed and the volume of the additional solvent in which the etchant is contained, to the volume of the etchant ranges from about 1 : 1 to about 30 : 1.

The process of adding the etchant to the mixed solution may be performed by adding an F ion-containing etchant having an F ion concentration of 0.5M to 12M to the mixed solution. Alternatively, an equivalent solution having the same etching speed as such a fluorine-containing compound may be used.

The heat-treatment maybe performed at about 800 to about 1300 °C.

After the addition of the etchant is completed, the etching reaction may be performed for about 5 minutes to about 30 minutes more by allowing it to stand.

The negative active material may improve the capacity and cycle-life characteristics of a rechargeable lithium battery.

A more complete appreciation of the present invention, and many of the attendant advantages thereof, will be readily apparent as the same becomes better understood by reference to the following detailed description when considered in conjunction with the accompanying drawings, wherein:
FIG. 1 is a schematic view of a rechargeable lithium battery according to an embodiment of the present invention;
FIGS. 2A to 2C are TEM micrographs of silicon oxide particles prepared according to Example 1;
FIGS. 3A to 3C are TEM photographs of silicon oxide particles prepared according to Comparative Example 2;
FIGS. 4 and 5 are XPS analysis graphs of silicon oxide particles prepared according to Comparative Examples 1 and 2, respectively;
FIGS. 6 and 7 are XPS analysis graphs of silicon oxide particles prepared according to Examples 2 and 5, respectively;
FIGS. 8 and 9 are XPS analysis graphs showing the area obtained by calculating an integral value of the atom% concentration of a silicon (Si) element of silicon oxide particles prepared according to Comparative Example 2 and Example 2 from the surface to a depth where the concentration of the silicon (Si) element is 55 atom%;
FIG. 10 is a graph illustrating cycle capacity of rechargeable lithium battery cells prepared according to the Examples and Comparative Examples.

According to the present invention, a negative active material for a rechargeable lithium battery includes silicon oxide particles represented by SiOₓ (0<x<2), and the silicon oxide particles have a concentration gradient such that the atom% concentration of the silicon (Si) element decreases according to the depth from the surface of the particles into the center of the particles and the atom% concentration of the oxygen (O) element is increased.

The silicon oxide particles represented by the SiOₓ (0<x<2) may include crystalline Si and non-crystalline silicon oxide.

The silicon oxide particles form concentration gradients of the silicon (Si) element and the oxygen (O) element, from the surface to the internal center of each particle, and the concentration of the silicon (Si) element increases toward the surface. To be specific, the concentration of crystalline Si increases toward the surface.

In a graph of atom% concentration of the silicon (Si) element according to the depth, the integral value of the atom% concentration of the silicon (Si) element may be about 5,000 to about 40,000 nm·atomic% from the surface where the depth is '0' to a depth where the concentration of the silicon (Si) element is 55 atom%.

The concentration of a particular element according to a depth from the surface of each particle toward the center of each particle may be measured using X-ray photoelectron spectroscopy (XPS).

The silicon oxide particles have a concentration gradient where the concentration of a silicon (Si) element, for example, crystalline Si, is high on the surface and the concentration decreases toward the center of each particle. Herein, when the concentration gradient of the silicon (Si) element is gentle and the concentration of the silicon (Si) element slowly decreases from the surface toward the center of the particle, the above-defined integral value increases, and when the concentration gradient of the silicon (Si) element is steep and the concentration of the silicon (Si) element rapidly decreases from the surface toward the center of the particle, the defined integral value deceases.

The silicon oxide particles of the present invention have a relatively high integral value. This signifies that the atomic% concentration gradient of the silicon (Si) element is gentle in the direction from the surface of each particle toward the center of each particle, and also signifies that the silicon (Si) element is abundant deep into the inside of each particle.

According to an embodiment, the integral area of the silicon (Si) concentration gradient graph at 55 atomic% may range from about 5,000 to about 40,000 nm·atomic%.

According to an embodiment, the area of the 55 atomic% triangle may range from about 5,000 to about 38,000 nm·atomic%.

The silicon oxide particles may have a thickness from the surface to the depth where the concentration of the silicon (Si) element is 55 atom% ranging from about 2 to about 20% of the particle diameter, i.e. from about 1/50 to about 1/5 of the particle diameter. According to an embodiment, the thickness may range from about 5 to about 10% of the particle diameter.

According to an embodiment, the thickness from the surface of the silicon oxide particles to a depth where the concentration of the silicon (Si) element is 55 atom % may range from about 100 nm to about 1,000 nm. According to an embodiment, the thickness from the surface of the silicon oxide particles to a depth where the concentration of the silicon (Si) element is 55 atom % ranges from about 300 to about 600 nm.

Silicon oxide included in the silicon oxide particles, such as SiO₂, may function as a resistor that makes it hard to perform a reaction with lithium and deteriorate the performance of a negative electrode. According to the present invention, the silicon oxide particles may have a decreased concentration of silicon oxide on the surface of the particles so as to improve the reactivity with lithium and decrease the resistance, and accordingly, the electrochemical characteristic of the rechargeable lithium battery may be improved.

The negative active material including the silicon oxide particles may improve the cycle-life characteristics of a rechargeable lithium battery while realizing high capacity as a silicon oxide-based material.

The negative active material may be prepared by etching the silicon oxide particles and removing the silicon oxide, such as SiO₂, toward the surface of each particle so that the silicon (Si) element has a more abundant phase than the oxygen (O) element toward the surface of each particle. The method of preparing the silicon oxide particles will be described later. Pores may be formed in the inside of the particles in the space from which the silicon oxide, such as SiO₂, is removed.

According to an embodiment, the silicon oxide particles may have a specific surface area ranging from about 10 to about 500 m²/g. The surface area may be determined using the BET method.

According to an embodiment, the silicon oxide particles may have a specific surface area ranging from about 10 to about 40 m²/g.

The x value of SiOₓ of the silicon oxide particles may range from about 0.5 to about 1.5. Specifically, the x value of SiOₓ may range from about 0.7 to about 0.9 based on the total particle. More specifically, the x value of SiOₓ of the silicon oxide particles may range from about 0.7 to about 0.9 in terms of the whole particle.

When the silicon oxide particles include the silicon (Si) element in the above range, capacity and efficiency may be appropriately improved.

The negative active material may further include one, which is not Si, selected from the group consisting of an alkali metal, an alkaline-earth metal, group 13 to group 16 elements, transition elements, a rare earth element and a combination thereof. The elements include Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po and a combination thereof.

The silicon oxide particles may have an average particle diameter of about 0.1µm to about 100 µm.

Hereafter, the method of preparing the silicon oxide particles is described.

According to the present invention, the method for preparing a negative active material for a rechargeable lithium battery includes: forming particles including crystalline Si and silicon oxide by performing a heat-treatment on silicon oxide in an inert atmosphere; preparing a mixed solution where the particles including the crystalline Si and silicon oxide are dispersed in a solvent; and adding an etchant into the mixed solution. The etchant may be added at a flow rate of about 0.1 to about 5 ml/min.

Through the method for preparing the negative active material for a rechargeable lithium battery, a negative active material including silicon oxide particles having the above-described concentration gradient may be prepared.

The silicon oxide particles including crystalline Si and amorphous SiO₂ may be prepared by using SiO powder and performing a heat-treatment in an atmosphere of Ar. The heat-treatment temperature may be from about 800 to about 1300 °C. The heat-treatment may be performed for about 30 minutes to about 10 hours.

Subsequently, a mixed solution is prepared by dispersing the silicon oxide which includes crystalline Si and amorphous SiO₂ formed through the heat treatment, in a solvent. Examples of the solvent include water, alcohols such as methanol, isopropanol, etc., and combinations thereof. For example, the solvent may be a mixed solvent including water, and the mixed solution may be an aqueous solution.

The silicon oxide including crystalline Si and amorphous SiO₂ is etched by adding an etchant into the mixed solution. According to an embodiment, the etchant is added in such a manner that the mole ratio of the silicon oxide to the etchant is from about 10 : 1 to about 1 : 10 in the mixed solution. Specifically, the mole ratio of the silicon oxide to the etchant may be from about 2 : 1 to about 1 : 2 in the mixed solution. The extent of the concentration gradient may be controlled by controlling the amount of the etchant and the amount of the silicon oxide within the above range. Amorphous SiO₂ is etched by the etchant such that a higher concentration of crystalline Si is present towards the surface of the particle.

The etchant may be added to the mixed solution at a flow rate of about 0.05 to about 5 ml/min. According to an embodiment, the etchant is added to the mixed solution at a flow rate of about 0.5 to about 2 ml/min. The extent of the concentration gradient may be controlled by controlling the amount of the etchant added within the above range.

The etching may be performed to the deep inside of each particle by controlling the extent of the concentration gradient, as described before, and a phase abundant with the silicon (Si) element may be formed.

As for the etchant, a material that is conventionally used as an etching solution may be used without restriction. For example, acids such as nitric acid and sulfuric acid may be used, or an F ion-containing compound, such as, HF, NH₄F, and NH₄HF₂, may be used. The etching process may be performed faster by using an F ion-containing compound as the etchant.

The etchant may be added to the mixed solution in an additional solvent as a mixture, such as an aqueous solution. In the mixture of the additional solvent and the etchant, the concentration of the etchant may be decided to achieve an appropriate level of etching speed. For example, the etchant may be a solution having an F ion concentration of 0.5M to 12M. When a different etchant is used, the etching speed, and therefore the concentration of the etchant required, will also be different. For example, an equivalent of a concentration that may have the same etching speed as the etching speed of a solution having an F ion concentration of 0.5M to 12M may be used. Generally, when an acid solution is used, a solution of a higher concentration may be used to acquire the same etching speed and effects as a compound solution including F ions. For another example, a mixed solution of an acid solution and an F ion-containing compound can be used to achieve considerably high etching speed while using less of the F ion-containing compound.

The etchant is added in a predetermined amount with respect to the solvent in the mixed solution, and then the mixture is allowed to stand for about 5 minutes to about 30 minutes to perform the etching reaction more.

According to another aspect of the present invention, a rechargeable lithium battery includes a negative electrode including the negative active material; a positive electrode including a positive active material; and a non-aqueous electrolyte.

Rechargeable lithium batteries may be classified into lithium ion batteries, lithium ion polymer batteries, and lithium polymer batteries according to the presence of a separator and the kind of electrolyte used in the battery. The rechargeable lithium batteries may have a variety of shapes and sizes, and include cylindrical, prismatic, or coin-type batteries, and may be thin film batteries or may be rather bulky in size. Structures and fabrication methods for lithium ion batteries are well known in the art.

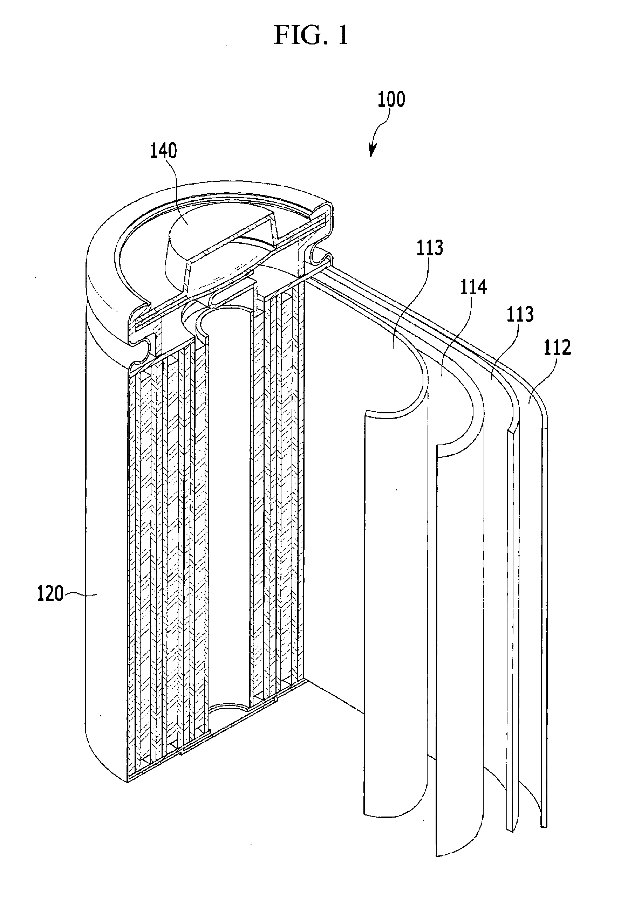

FIG. 1 is an exploded perspective view of a rechargeable lithium battery. Referring to FIG. 1, the rechargeable lithium battery 100 is formed with a cylindrical shape and includes a negative electrode 112, a positive electrode 114, a separator 113 disposed between the the positive electrode 114 and negative electrode 112, an electrolyte (not shown) impregnated in the negative electrode 112, the positive electrode 114, and the separator 113, a battery case 120, and sealing member 140 sealing the battery case 120. The rechargeable lithium battery 100 is fabricated by sequentially stacldng a negative electrode 112, a positive electrode 114, and separator 113, and spiral-winding them and housing the wound product in the battery case 120.

The negative electrode may include a current collector and a negative active material layer formed over the current collector, and the negative active material layer includes a negative active material. The negative active material is the same as described above. The negative active material layer may include a binder, and optionally may further include a conductive material.

The binder improves binding properties of the negative active material particles to each other and to a current collector. Examples of the binder include at least one selected from the group consisting of polyvinylalcohol, carboxymethylcellulose, hydroxypropylcellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon and the like, but are not limited thereto.

Any electrically conductive material may be used as a conductive material unless it causes a chemical change. Examples of the conductive material include: carbon-based materials such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; and mixtures thereof.

The current collector may be a copper foil, a nickel foil, a stainless steel foil, a titanium foil, a nickel foam, a copper foam, a polymer substrate coated with a conductive metal, or combinations thereof.

The positive electrode may include a current collector and a positive active material layer disposed on the current collector.

The positive active material includes lithiated intercalation compounds that reversibly intercalate and deintercalate lithium ions. The positive active material may include a composite oxide including at least one selected from the group consisting of cobalt, manganese, and nickel, as well as lithium. In particular, the following lithium-containing compounds may be used:
LiₐA_{1-b}R_{b}D₂ (wherein, in the above formula, 0.90 ≤ a ≤ 1.8 and 0 ≤ b ≤ 0.5); LiₐE_{1-b}R_{b}O_{2-c}D_{c} (wherein, in the above formula, 0.90 ≤ a ≤1.8, 0 ≤ b ≤ 0.5 and 0 ≤ c ≤ 0.05); LiE_{2-b}R_{b}O_{4-c}D_{c} (wherein, in the above formula, 0 ≤ b ≤ 0.5, 0 ≤ c ≤ 0.05); LiₐNi_{1-b-}cCo_{b}R_{c}Dₐ (wherein, in the above formula, 0.90 ≤ a ≤ 1.8, 0 ≤ b ≤ 0.5, 0 ≤ c ≤ 0.05 and 0 < α ≤ 2); LiₐNi_{1-b-c}Co_{b}R_{c}O_{2-α}Z_{α} (wherein, in the above formula, 0.90 ≤ a ≤ 1.8, 0 ≤ b ≤ 0.5, 0 ≤ c ≤ 0.05 and 0 < α < 2); LiₐNi_{1-b-c}Co_{b}R_{c}O₂₋ₐZ₂ (wherein, in the above formula, 0.90 ≤ a ≤ 1.8, 0 ≤b ≤ 0.5, 0 ≤ c ≤ 0.05 and 0 < α < 2); LiₐNi_{1-b-c}Mn_{b}R_{c}D_{α} (wherein, in the above formula, 0.90 ≤ a ≤ 1.8, 0 ≤ b ≤ 0.5, 0 ≤ c ≤ 0.05 and 0 < α ≤ ₂); LiₐNi_{1-b-c}Mn_{b}R_{c}O₂₋ₐZ_{α} (wherein, in the above formula, 0.90 ≤ a ≤ 1.8, 0 ≤ b ≤ 0.5, 0 ≤ c ≤ 0.05 and 0 < α < 2); LiₐNi_{1-b-c}Mn_{b}R_{c}O_{2-α}Z₂ (wherein, in the above formula, 0.90 ≤ a ≤ 1.8, 0 ≤ b ≤ 0.5, 0 ≤ c ≤ 0.05 and 0 < α < 2); LiₐNi_{b}E_{c}G_{d}O₂ (wherein, in the above formula, 0.90 ≤ a ≤ 1.8, 0 ≤ b ≤ 0.9, 0 ≤ c ≤ 0.5 and 0.001 ≤ d ≤ 0.1); LiₐNi_{b}Co_{c}Mn_{d}GₑO₂ (wherein, in the above formula, 0.90 ≤ a ≤ 1.8, 0 ≤ b ≤ 0.9, 0 ≤ c ≤ 0.5, 0 ≤ d ≤_{0.5} and 0.001 ≤ e ≤ 0.1); LiₐNiG_{b}O₂ (wherein, in the above formula, 0.90 ≤ a ≤ 1.8 and 0.001 ≤ b ≤ 0.1); LiₐCoG_{b}O₂ (wherein, in the above formula, 0.90 ≤ a ≤ 1.8 and 0.001 ≤ b ≤ 0.1); LiₐMnG_{b}O₂ (wherein, in the above formula, 0.90 ≤ a ≤ 1.8 and 0.001 ≤ b ≤ 0.1); LiₐMn₂G_{b}O₄ (wherein, in the above formula, 0.90 ≤ a ≤ 1.8 and 0.001 ≤ b ≤ 0.1); QO₂; QS₂; LiQS₂; V₂O₅; LiV₂O₅; LiTO₂; LiNiVO₄; Li_{(3-f)}J₂(PO₄)₃ (0 ≤ f ≤ 2); Li_{(3-f)}Fe₂(PO₄)ₐ (0 ≤ f ≤ 2); and LiFePO₄.

In the above chemical formulae, A is Ni, Co, Mn, or a combination thereof; R is Al, Ni, Co, Mn, Cr, Fe, Mg, Sr, V, a rare earth element, or a combination thereof; D is O, F, S, P, or a combination thereof; E is Co, Mn, or a combination thereof; Z is F, S, P, or a combination thereof; G is Al, Cr, Mn, Fe, Mg, La, Ce, Sr, V, or a combination thereof; Q is Ti, Mo, Mn, or a combination thereof; T is Cr, V, Fe, Sc, Y, or a combination thereof; and J is V, Cr, Mn, Co, Ni, Cu, or a combination thereof.

The compound can have a coating layer on the surface, or can be mixed with a compound having a coating layer. The coating layer may include at least one coating element compound selected from the group consisting of an oxide of a coating element, a hydroxide of a coating element, an oxyhydroxide of a coating element, an oxycarbonate of a coating element, and a hydroxyl carbonate of a coating element. The compounds for a coating layer can be amorphous or crystalline. The coating element for a coating layer may include Mg, Al, Co, K, Na, Ca, Si, Ti, V, Sn, Ge, Ga, B, As, Zr, or a mixture thereof. The coating layer can be formed in a method having no negative influence on properties of a positive active material by including these elements in the compound. For example, the method may include any coating method such as spray coating, dipping, and the like, but is not illustrated in more detail, since it is well-known to those skilled in the art.

The positive active material layer may include a binder and a conductive material.

The binder improves binding properties of the positive active material particles to each other and to a current collector. Examples of the binder include at least one selected from the group consisting of polyvinyl alcohol, carboxymethyl cellulose, hydroxypropyl cellulose, diacetyl cellulose, polyvinylchloride, carboxylated polyvinyl chloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The conductive material is used to provide conductivity to an electrode. In the battery including the same, it may include any electronic conductive material as long as it does not cause a chemical change. For example, it may include natural graphite, artificial graphite, carbon black, acetylene black, ketjen black, carbon fiber, metal powder, metal fiber and the like such as copper, nickel, aluminium, silver or the like, or one or at least one kind mixture of conductive material such as a polyphenylene derivative and the like.

The current collector may be Al, but is not limited thereto.

The negative and positive electrodes may be fabricated by a method including mixing the active material, a conductive material, and a binder into an active material composition, and coating the composition on a current collector, respectively. The electrode manufacturing method is well known, and thus is not described in detail in the present specification. The solvent may include N-methylpyrrolidone and the like, but is not limited thereto.

The electrolyte may include a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent. Examples of the carbonate-based solvent include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylmethyl carbonate (EMC), ethylene carbonate (EC), propylene carbonate (PC), butylene carbonate (BC), and the like, and examples of the ester-based solvent include methyl acetate, ethyl acetate, n-propyl acetate, methylpropionate, ethylpropionate, γ-butyrolactone, decanolide, valerolactone, mevalonolactone, caprolactone, and the like. Examples of the ether-based solvent include dibutyl ether, tetraglyme, diglyme, dimethoxyethane, 2-methyltetrahydrofuran, tetrahydrofuran, and the like, and examples of the ketone-based solvent include cyclohexanone, and the like. Examples of the alcohol-based solvent include ethyl alcohol, isopropyl alcohol, and the like, and examples of the aprotic solvent include nitriles such as R-CN (wherein R is a C₂ to C₂₀ linear, branched, or cyclic hydrocarbon group including a double bond, an aromatic ring, or an ether bond), amides such as dimethylformamide, dioxolanes such as 1,3-dioxolane, sulfolanes, and the like.

The non-aqueous organic solvent may be used singularly or in a mixture. When the organic solvent is used in a mixture, the mixture ratio can be controlled in accordance with the desired battery performance.

A carbonate-based solvent is prepared by mixing a cyclic carbonate and a linear carbonate. The cyclic carbonate and the linear carbonate are mixed together in a volume ratio of about 1:1 to about 1:9. Within this range, performance of the electrolyte may be improved.

The non-aqueous organic electrolyte may also be prepared by mixing a carbonate-based solvent with an aromatic hydrocarbon-based solvent. The carbonate-based and the aromatic hydrocarbon-based solvents may be mixed together in a volume ratio ranging from about 1:1 to about 30:1.

The aromatic hydrocarbon-based organic solvent may be represented by the following Chemical Formula 1.

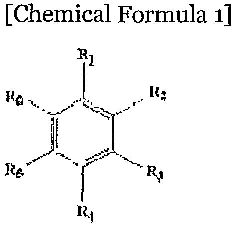

In Chemical Formula 1, R₁ to R₆ are each independently hydrogen, a halogen, a C₁ to C₁₀ alkyl group, a C₁ to C₁₀ haloalkyl group, or a combination thereof.

The aromatic hydrocarbon-based organic solvent may include benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 1,2-difluorotoluene, 1,3-difluorotoluene, 1,4-difluorotoluene, 1,2,3-trifluorotoluene, 1,2,4-trifluorotoluene, chlorotoluene, 1,2-dichlorotoluene, 1,3-dichlorotoluene, 1,4-dichlorotoluene, 1,2,3-trichlorotoluene, 1,2,4-trichlorotoluene, iodotoluene, 1,2-diiodotoluene, 1,3-diiodotoluene, 1,4-diiodotoluene, 1,2,3-triiodotoluene, 1,2,4-triiodotoluene, xylene, or a combination thereof.

The non-aqueous electrolyte may further include vinylene carbonate, an ethylene carbonate-based compound represented by the following Chemical Formula 2, or a combination thereof to improve cycle-life.

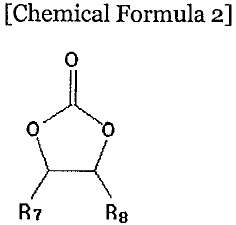

In Chemical Formula 2, R₇ and R₈ are independently selected from hydrogen, , a halogen, a cyano group (CN), a nitro group (NO₂), and a C₁ to C₅ fluoroalkyl group, provided that at least one of R₇ and R₈ is selected from a halogen, a cyano group (CN), a nitro group (NO₂), and a C₁ to C₅ fluoroalkyl group.

Examples of the ethylene carbonate-based compound include difluoroethylene carbonate, chloroethylene carbonate, dichloroethylene carbonate, bromoethylene carbonate, dibromoethylene carbonate, nitroethylene carbonate, cyanoethylene carbonate, fluoroethylene carbonate, and the like. The amount of the vinylene carbonate or the ethylene carbonate-based compound used to improve cycle life may be adjusted within an appropriate range.

The lithium salt is dissolved in an organic solvent, supplies lithium ions in a battery, operates a basic operation of the rechargeable lithium battery, and improves lithium ion transportation between positive and negative electrodes therein. Examples of the lithium salt include LiPF₆, LiBF₄, LiSbF₆, LiAsF₆, LiC₄F₉SO₃, LiClO₄, LiAlO₂, LiAlCl₄, LiN(CₓF₂ₓ₊₁SO₂)(C_{y}F_{2y+1}SO₂), (where x and y are natural numbers), LiCl, LiI, LiB(C₂O₄)₂ (lithium bis(oxalato) borate, LiBOB), or a combination thereof, as a supporting electrolytic salt. The lithium salt may be used in a concentration ranging from 0.1 M to 2.0 M. When the lithium salt is included at the above concentration range, an electrolyte may have excellent performance and lithium ion mobility due to optimal electrolyte conductivity and viscosity.

A separator 113 may include any materials commonly used in a conventional lithium battery so long as it functions to separate a negative electrode 112 from a positive electrode 114 and provide a transporting passage of lithium ions. In other words, it may have a low resistance to ion transport and an excellent impregnation for electrolyte. For example, the material may be selected from glass fiber, polyester, TEFLON (tetrafluoroethylene), polyethylene, polypropylene, polytetrafluoroethylene (PTFE), or a combination thereof. It may be in the form of a non-woven fabric or a woven fabric. For example, for a lithium ion battery, a polyolefin-based polymer separator such as polyethylene, polypropylene or the like is mainly used. In order to ensure heat resistance or mechanical strength, a coated separator including a ceramic component or a polymer material may be used. It may have a mono-layered or multi-layered structure.

The following examples illustrate the present invention in more detail.

### Examples

### Example 1: Preparation of negative active material

A heat treatment was performed on SiO powder at 1000°C under an Ar atmosphere for 1 hour. 100g of the powder obtained from the heat-treatment was dispersed in 350 ml of ethanol 40 volume% aqueous solution. 50 ml of 49 volume% HF solution was added to the dispersion solution at a flow rate of 1 ml/min while agitating the dispersion solution at a speed of 300 RPM. After the addition was ended, the resultant solution was allowed to stand to additionally perform a reaction for 30 minutes. Then, silicon oxide particle powder (D50 was 5 µm) was obtained by cleaning the powder with an aspirator and transmitting 5L of distilled water through the aspirator.

### Example 2: Preparation of negative active material

Silicon oxide particle powder (D50 was 5 µm) was obtained according to the same method as Example 1, except that 100mL of 49 volume% HF aqueous solution was added.

### Example 3: Preparation of negative active material

Silicon oxide particle powder (D50 was 5 µm) was obtained according to the same method as Example 1, except that 200mL of 49 volume% HF aqueous solution was added.

### Example 4: Preparation of negative active material

Silicon oxide particle powder (D50 was 5 µm) was obtained according to the same method as Example 1, except that the HF aqueous solution was added at a flow rate of 0.5 ml/min.

### Example 5: Preparation of negative active material

Silicon oxide particle powder (D50 was 5 µm) was obtained according to the same method as Example 1, except that the HF aqueous solution was added at a flow rate of 2.0 ml/min.

### Comparative Example 1: Preparation of negative active material

Silicon oxide particle powder (D50 was 5 µm) was obtained by performing heat-treatment on SiO powder at 1000°C under an Ar atmosphere for 1 hour.

### Comparative Example 2: Preparation of negative active material

A heat treatment was performed on SiO powder at 1000°C under an Ar atmosphere for 1 hour. 100g of the powder obtained from the heat-treatment was mixed with 50 ml of 49 volume% HF solution all at once to be etched. After the addition of the HF solution, an etching reaction was performed for 30 minutes. Then, silicon oxide particle powder (D50 was 5 µm) was obtained by cleaning the powder with an aspirator and transmitting 5L of distilled water through the aspirator.

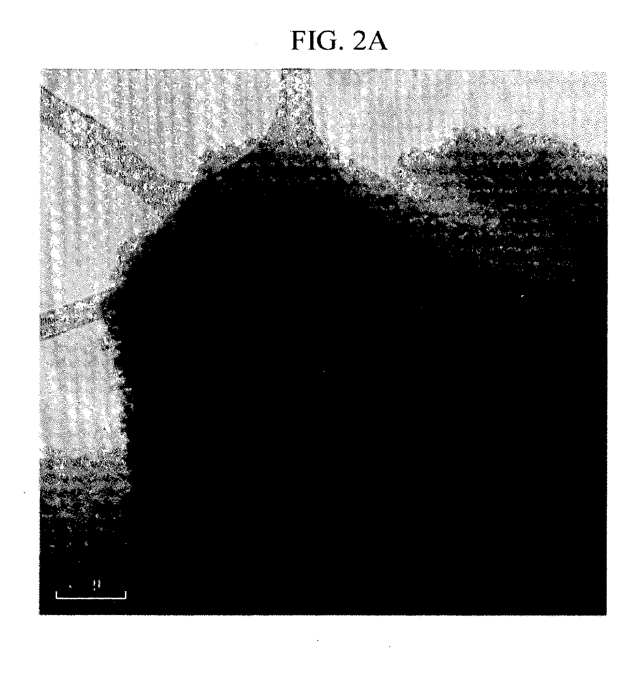

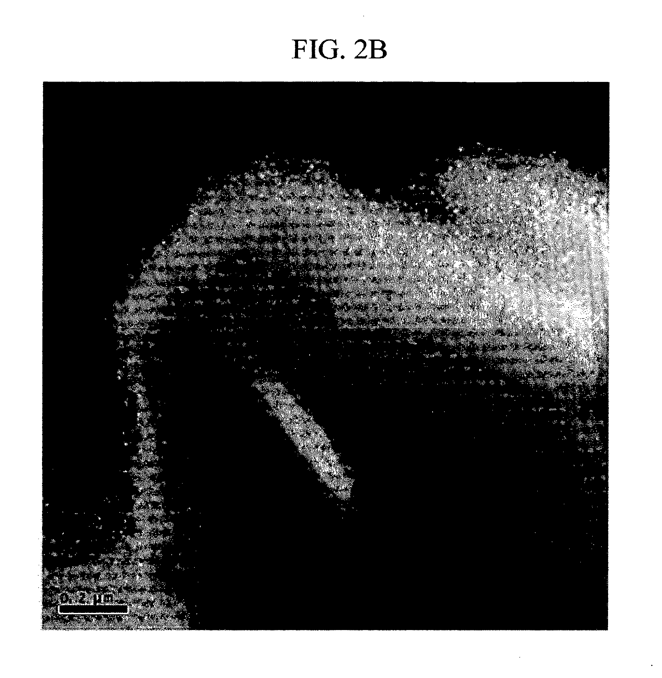

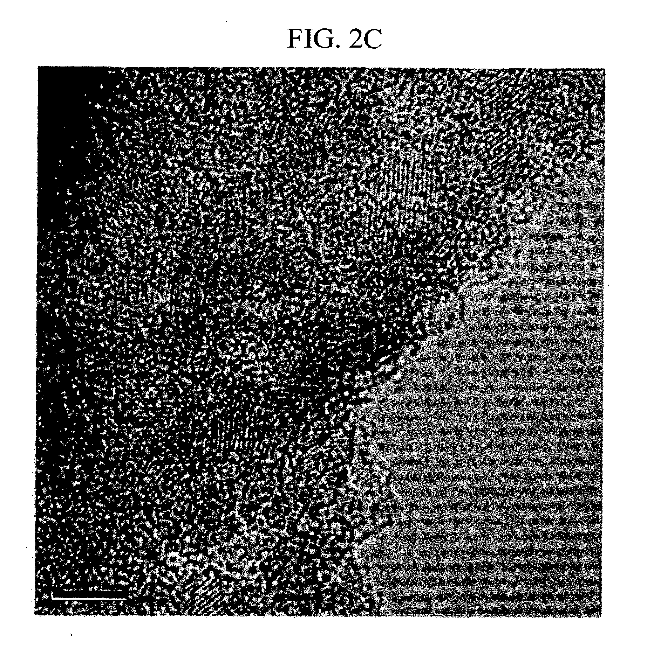

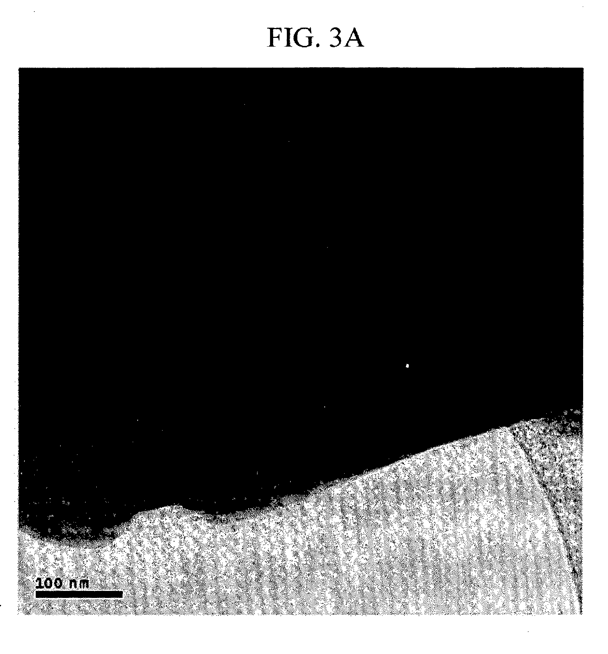

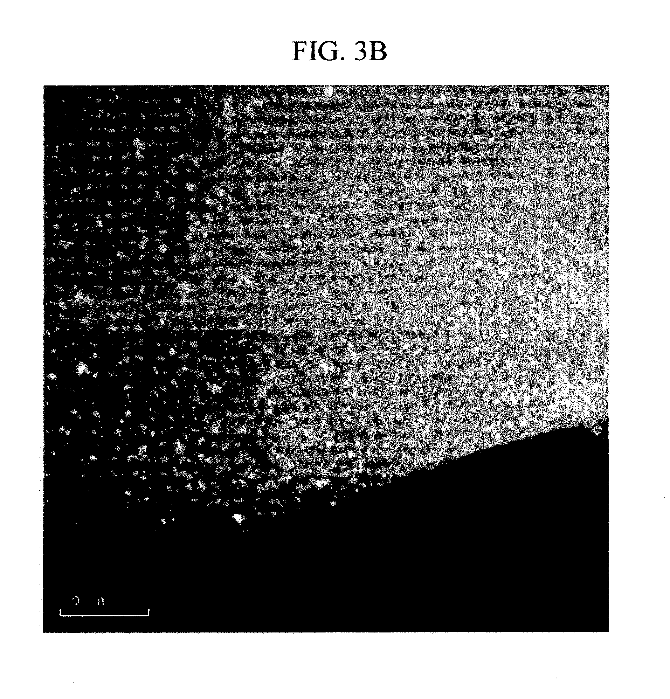

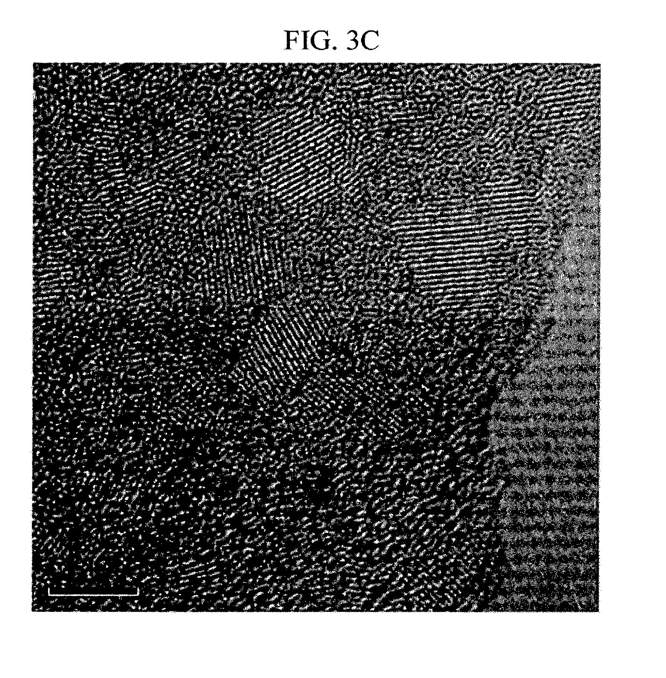

FIGS. 2A to 2C are transmission electron microscopic (TEM) photographs of the silicon oxide particles prepared according to Example 1. FIG. 2A is a bright field image and FIG. 2B is a dark field image. FIG. 2C is a high resolution image. FIGS. 3A to 3C are TEM photographs of the silicon oxide particles prepared according to Comparative Example 2. FIG. 3A is a bright field image and FIG. 3B is a dark field image. FIG. 3C is a high resolution image. Whereas the silicon (Si) particles shown in a bright white color evenly appeared throughout the particles in FIG. 3B for the silicon oxide particles prepared according to Comparative Example 1, the silicon (Si) particles shown in a bright white color appeared mainly on the surface in FIG. 2B for the silicon oxide particles prepared according to Example 1. In short, it may be seen that the silicon oxide particles prepared according to Example 1 had a high concentration of the silicon (Si) element on the surface.

### Experimental Example 1: Measurement of internal concentration through X-ray photoelectron spectroscopy (XPS)

X-ray photoelectron spectroscopy (XPS) analysis was performed on the silicon oxide particles prepared according to Examples 1 to 5 and Comparative Examples 1 and 2, and graphs of the atomic% concentration of the silicon (Si) element and the atomic% concentration of the oxygen (O) element along the depth from the surface of each particle to the center of the particle were obtained by the XPS measurement result for a silicon (Si) element and an oxygen (O) element.

### XPS analysis conditions

- Analysis apparatus: ESCA 250 spectrometer
- Pressure in analysis chamber: 8*10⁻¹⁰mbar
- Used radiation ray: monochromatic Al_{kα}
- Activation energy of X-ray: 1486.8eV
- Analysis area:500µm²
- Approximate thickness of a surface layer of XPS analysis: about 5nm
- Depth condition: Depth profile was obtained through Ar⁺ ion beam sputtering (3keV). The sputtering speed decided for SiO₂ was 10 nm/min.

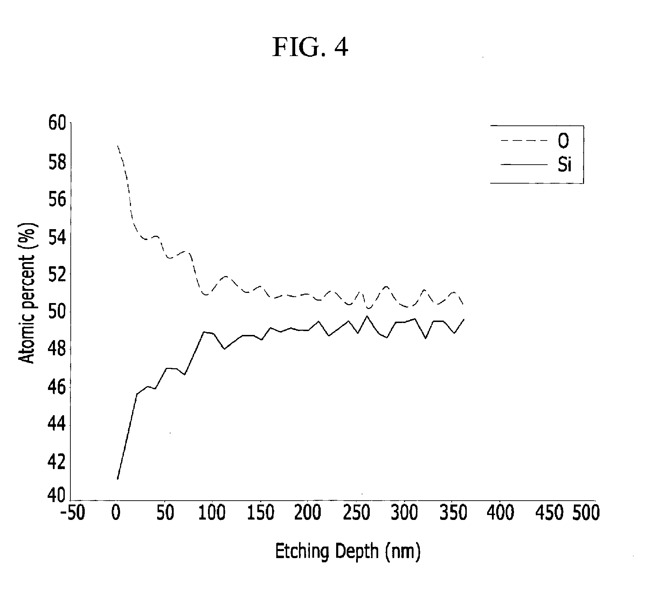

FIG. 4 shows an analysis of the silicon oxide particles prepared according to Comparative Example 1. The surface was oxidized, and an oxygen-abundant phase was formed on the surface.

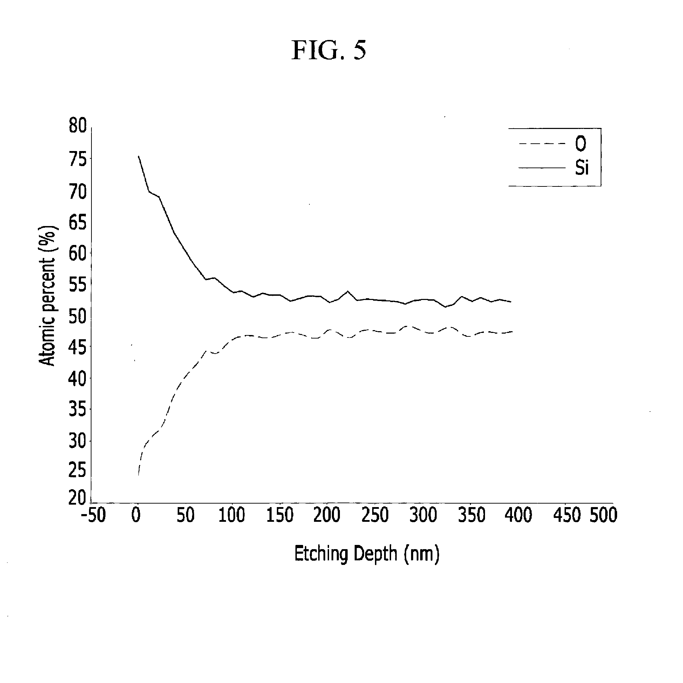

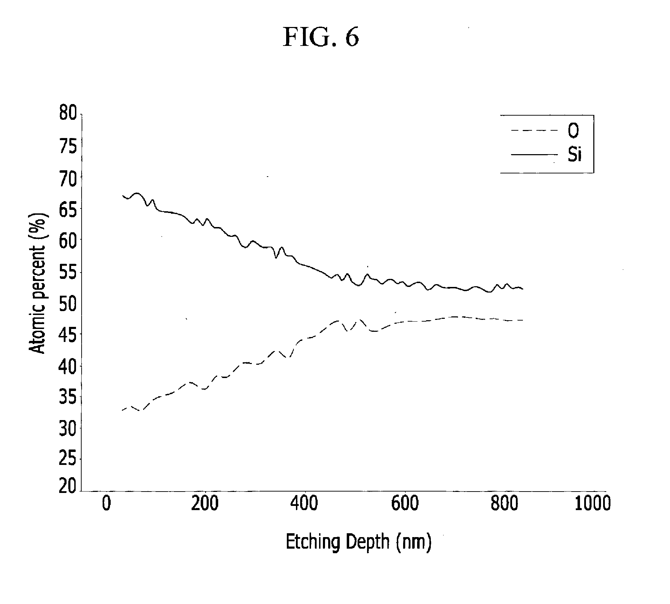

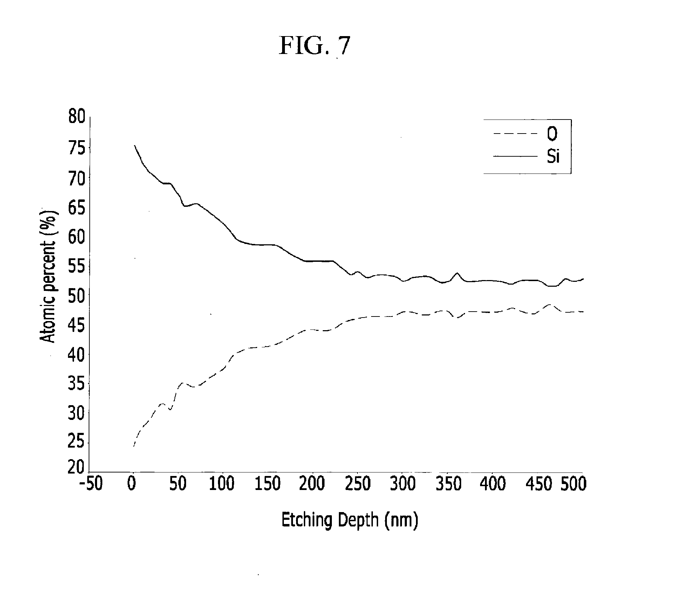

FIG. 5 shows analysis of the silicon oxide particles prepared according to Comparative Example 2, and FIGS. 6 and 7 show analyses of the silicon oxide particles prepared according to Examples 2 and 5. Whereas the silicon oxide particles of Comparative Example 2 had a profile that the amount of silicon (Si) rapidly decreased as it went from the surface to the center because the silicon oxide was drastically etched from the surface, the silicon oxide particles of Examples 2 and 5 had a smooth concentration gradient as it went from the surface to the center.

In the graph, the integral value of the atom% concentration of the silicon (Si) element from the surface where the depth=o to a depth where the concentration of the silicon (Si) element was 55 atom% was obtained and the results are presented in Table 1.

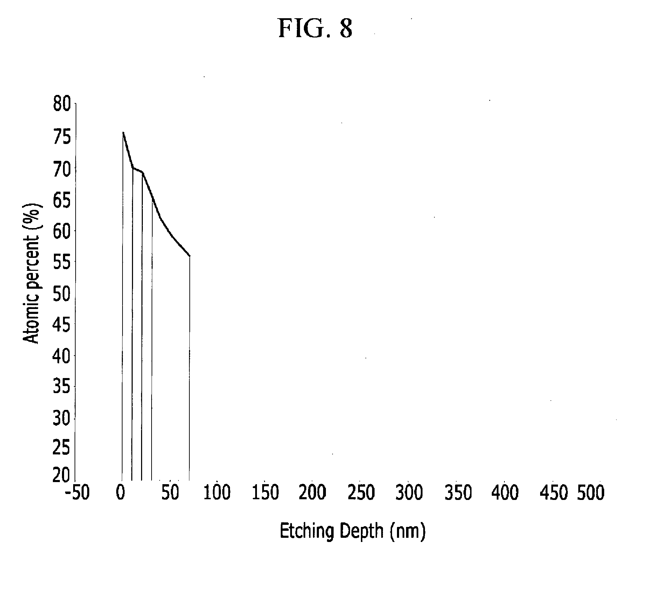

FIG. 8 shows an area obtained by calculating the integral value of Comparative Example 2.

The depth where the concentration of the silicon (Si) element was 55 atom% was about 70 nm in case of the silicon oxide particles of Comparative Example 2, and thus the integral value of the concentration of the silicon (Si) element from the surface to the depth of about 70 nm was calculated and shown in the following Table 1.

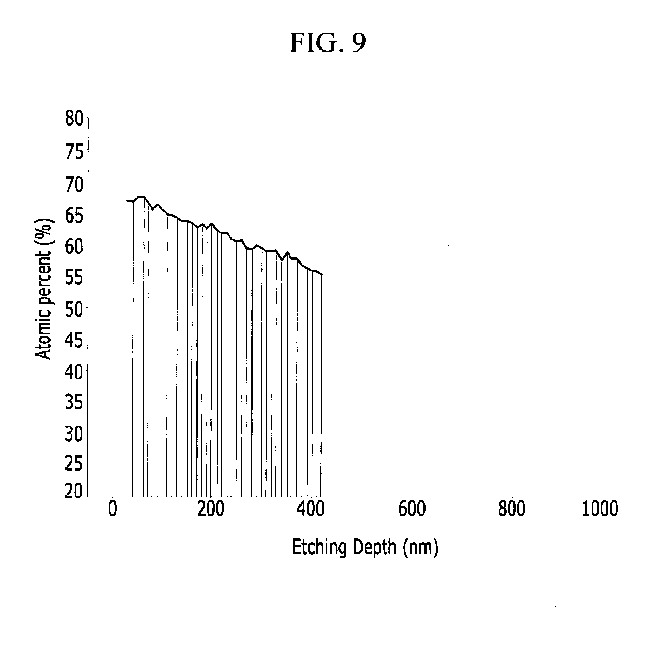

FIG. 9 shows an area obtained by calculating the integral value of Example 2. The depth where the concentration of the silicon (Si) element was 55 atom% was about 410 nm in case of the silicon oxide particles of Example 2, and the integral value of the concentration of the silicon (Si) element from the surface to the depth of 410 nm was calculated and shown in the following Table 1.

The integral values of Examples 3 to 5 were calculated according to the same method as FIGS. 8 and 9 and shown in the following Table 1.

**Table 1**

| | Area (nm·atomic%) | Specific surface area (m²/g) | Depth at which atomic concentration of silicon is 55% (nm) |
|---|---|---|---|
| Example 1 | 19020 | 14.6 | 260 |
| Example 2 | 24014 | 31.2 | 410 |
| Example 3 | 38067 | 38.8 | 640 |
| Example 4 | 26653 | 15.2 | 315 |
| Example 5 | 12020 | 25.9 | 190 |
| Comparative Example 1 | - | 1.7 | - |
| Comparative Example 2 | 4508 | 8.1 | 70 |

### Experimental Example 2: Evaluation of capacity characteristics

2016 coin-type half-cells were manufactured by using the silicon oxide particle powders prepared according to Examples 1 to 5 and Comparative Examples 1 to 2 and used as a negative active material for a rechargeable lithium battery cell. An electrode plate was manufactured using a composition having a weight ratio of active material:conductive material:binder of 80:10:10 by using Denka black as a conductive material, polyimide (PI) as a binder, and N-methyl-2-pyrrolidone (NMP) as a solvent. The fabrication of a battery cell was completed by using lithium metal as a counter electrode, interposing a separator in-between, injecting an electrolyte solution, and sealing it. As for the electrolyte solution, EC(ethylenecarbonate)/ EMC(ethylmethylcarbonate)/ DMC(dimethylcarbonate) in a volume ratio of 3:3:4 was used, and 5 volume% of fluorinated ethyl carbonate (FEC) was used as an additive.

The fabricated rechargeable lithium battery cells were charged/discharged in the first cycle at 25°C at a rate of 0.05C at a voltage of 0.05V to 1.4V, and the first cycle charge quantities of the rechargeable lithium battery cells were shown in the following Table 2.

### Experimental Example 3: Estimation of cycle-life characteristics

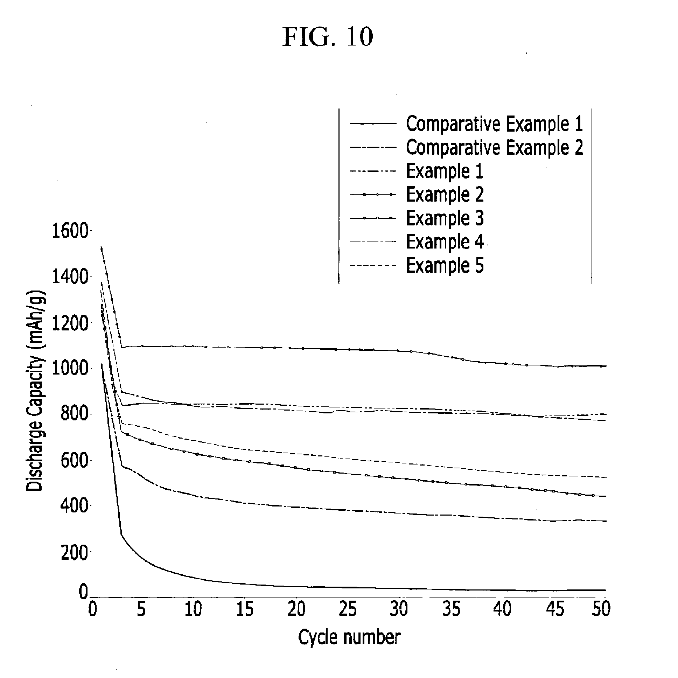

The cycle-life characteristics of the rechargeable lithium battery cells were estimated by charging/discharging the rechargeable lithium battery cells at 25°C at 0.5C 50 times and shown in FIG. 10, and their first cycle efficiency was calculated. The results are shown in the following Table 2.

**Table 2**

| | Charge quantity [mAh/g] | 1st cycle efficiency (%) |
|---|---|---|
| Example 1 | 2290 | 63.2 |
| Example 2 | 2246 | 67.0 |
| Example 3 | 2368 | 57.8 |
| Example 4 | 2281 | 65.4 |
| Example 5 | 2311 | 60.3 |
| Comparative Example 1 | 2099 | 52.7 |
| Comparative Example 2 | 2210 | 59.3 |

While the present invention has been described in connection with certain exemplary embodiments thereof, it is to be understood that the invention is not limited to the disclosed embodiments, but, on the contrary, is intended to cover various modifications and equivalent arrangements included within the scope of the appended claims.

## Claims

1. A negative active material for a rechargeable lithium battery comprising silicon oxide particles represented by formula 1:
SiOₓ, formula 1
in which 0 < x < 2
***characterised in that*** the silicon oxide particles exhibit an atomic concentration gradient from the surface of the particle to the centre of the particle such that the atomic concentration of silicon is decreased as a function of the depth from the surface of the particle to the centre of the particle; wherein the distance from the surface of the particle to the depth at which the atomic concentration of silicon is 55% ranges from 2 to 20% of the particle diameter.

2. The negative active material of claim 1, wherein the integral value of the atomic concentration of silicon from the surface to a depth at which the atomic concentration of silicon is 55% ranges from 5,000 to 40,000 nm·atomic %.

3. The negative active material of claim 1 or claim 2, wherein in formula 1, 0.5 ≤ x ≤ 1.5.

4. The negative active material of any preceding claim, wherein the silicon oxide particles include crystalline silicon and non-crystalline silicon oxide.

5. The negative active material of any preceding claim, wherein the concentration of crystalline silicon is increased towards the surface of the particle.

6. The negative active material of any preceding claim, wherein the distance from the surface of the particle to the depth at which the concentration of silicon is 55 % ranges from 100 nm to 1000 nm.

7. The negative active material of any preceding claim, wherein the average particle diameter of the silicon oxide particles is from 0.1 µm to 100 µm.

8. The negative active material of any preceding claim, wherein the silicon oxide particles have a specific surface area of from 10 to 500 m²/g.

9. A method of preparing a negative active material for a rechargeable lithium battery as claimed in any of claims 1 to 8, comprising:
heat-treating silicon oxide in an inert atmosphere to form silicon oxide particles;
dispersing the silicon oxide particles in a solvent to prepare a mixed solution; and
adding an etchant to the mixed solution.

10. The method of claim 9, wherein the etchant is added to the mixed solution at a flow rate of 0.05 to 5 ml/min.

11. The method of claim 9 or claim 10, wherein the mole ratio of the silicon oxide in the mixed solution to the total amount of etchant added is from 10:1 to 1:10.

12. The method of any of claims 9 to 11, wherein the etchant is selected from the group consisting of a fluorine-containing compound, an acid, and a combination thereof.

13. The method of any of claims 9 to 12, wherein the etchant is a fluorine-containing solution having a fluorine ion concentration of from 0.5M to 12M or an equivalent solution having the same etching speed as such a fluorine-containing compound.

14. The method of any of claims 9 to 13, wherein the etchant is added such that the volume ratio of the sum of the volume of the solvent in which the silicon oxide particles are dispersed and the additional solvent in which the etchant is contained, to the volume of the etchant ranges from 1 : 1 to 30 : 1.

15. A rechargeable lithium battery including:
a negative electrode comprising the negative active material of any of claims 1 to 8;
a positive electrode comprising a positive active material; and
a non-aqueous electrolyte.

## Patentansprüche

1. Negativ-Aktivmaterial für eine wiederaufladbare Lithiumbatterie, umfassend Siliciumoxidteilchen, dargestellt durch die Formel 1:
SiOₓ Formel 1,
wobei 0 < x < 2,
***dadurch gekennzeichnet, dass*** die Siliciumoxidteilchen einen Atomkonzentrationsgradienten von der Teilchenoberfläche zur Teilchenmitte aufweisen, derart dass die Atomkonzentration von Silicium in Abhängigkeit von der Tiefe von der Teilchenoberfläche zur Teilchenmitte abnimmt; wobei die Entfernung von der Teilchenoberfläche bis zu der Tiefe, in der die Atomkonzentration von Silicium 55 % beträgt, im Bereich von 2 bis 20 % des Teilchendurchmessers liegt.

2. Negativ-Aktivmaterial nach Anspruch 1, wobei der Integralwert der Atomkonzentration von Silicium von der Oberfläche bis zu einer Tiefe, in der die Atomkonzentration von Silicium 55 % beträgt, im Bereich von 5.000 bis 40.000 nm·Atom-% liegt.

3. Negativ-Aktivmaterial nach Anspruch 1 oder Anspruch 2, wobei in der Formel 1 gilt: 0,5 ≤ x ≤ 1,5.

4. Negativ-Aktivmaterial nach einem vorangehenden Anspruch, wobei die Siliciumoxidteilchen kristallines Silicium und nicht kristallines Siliciumoxid umfassen.

5. Negativ-Aktivmaterial nach einem vorangehenden Anspruch, wobei die Konzentration von kristallinem Silicium zur Teilchenoberfläche hin zunimmt.

6. Negativ-Aktivmaterial nach einem vorangehenden Anspruch, wobei die Entfernung von der Teilchenoberfläche bis zu der Tiefe, in der die Siliciumkonzentration 55 % beträgt, im Bereich von 100 nm bis 1.000 nm liegt.

7. Negativ-Aktivmaterial nach einem vorangehenden Anspruch, wobei der durchschnittliche Teilchendurchmesser der Siliciumoxidteilchen 0,1 µm bis 100 µm beträgt.

8. Negativ-Aktivmaterial nach einem vorangehenden Anspruch, wobei die Siliciumoxidteilchen eine spezifische Oberfläche von 10 bis 500 m²/g aufweisen.

9. Verfahren zur Herstellung eines Negativ-Aktivmaterials für eine wiederaufladbare Lithiumbatterie nach einem der Ansprüche 1 bis 8, umfassend:
Wärmebehandeln von Siliciumoxid in einer inerten Atmosphäre zur Ausbildung von Siliciumoxidteilchen;
Dispergieren der Siliciumoxidteilchen in einem Lösungsmittel zur Herstellung eines Lösungsgemischs; und
Zugeben eines Ätzmittels zu dem Lösungsgemisch.

10. Verfahren nach Anspruch 9, wobei das Ätzmittel dem Lösungsgemisch mit einem Volumenstrom von 0,05 bis 5 ml/min zugegeben wird.

11. Verfahren nach Anspruch 9 oder Anspruch 10, wobei das Molverhältnis des Siliciumoxids in dem Lösungsgemisch zur zugegebenen Gesamtmenge an Ätzmittel 10:1 bis 1:10 beträgt.

12. Verfahren nach einem der Ansprüche 9 bis 11, wobei das Ätzmittel ausgewählt ist aus der Gruppe bestehend aus einer fluorhaltigen Verbindung, einer Säure und einer Kombination derselben.

13. Verfahren nach einem der Ansprüche 9 bis 12, wobei das Ätzmittel eine fluorhaltige Lösung mit einer Fluorionenkonzentration von 0,5 M bis 12 M oder eine äquivalente Lösung mit der gleichen Ätzgeschwindigkeit wie eine solche fluorhaltige Verbindung ist.

14. Verfahren nach einem der Ansprüche 9 bis 13, wobei das Ätzmittel derart zugegeben wird, dass das Volumenverhältnis der Summe des Volumens des Lösungsmittels, in dem die Siliciumoxidteilchen dispergiert sind, und des zusätzlichen Lösungsmittels, in dem das Ätzmittel enthalten ist, zum Volumen des Ätzmittels im Bereich von 1:1 bis 30:1 liegt.

15. Wiederaufladbare Lithiumbatterie, umfassend:
eine negative Elektrode, umfassend das Negativ-Aktivmaterial nach einem der Ansprüche 1 bis 8;
eine positive Elektrode, umfassend ein Positiv-Aktivmaterial; und
einen nicht wässrigen Elektrolyten.

## Revendications

1. Matériau actif négatif pour batterie au lithium rechargeable comprenant des particules d'oxyde de silicium représentées par la formule 1 :
SiOₓ, formule 1
dans laquelle 0 < x < 2
**caractérisé en ce que** les particules d'oxyde de silicium présentent un gradient de concentration atomique depuis la surface de la particule jusqu'au centre de la particule de sorte que la concentration atomique du silicium va décroissant en fonction de la profondeur depuis la surface de la particule jusqu'au centre de la particule ; la distance depuis la surface de la particule jusqu'à la profondeur à laquelle la concentration atomique de silicium est de 55 % représentant de 2 à 20 % du diamètre de la particule.

2. Matériau actif négatif selon la revendication 1, dans lequel la valeur entière de la concentration atomique du silicium depuis la surface jusqu'à une profondeur à laquelle la concentration atomique du silicium est de 55 % va de 5 000 à 40 000 nm·% atomique.

3. Matériau actif négatif selon la revendication 1 ou la revendication 2, dans lequel dans la formule 1, 0,5 ≤ x ≤ 1,5.

4. Matériau actif négatif selon l'une quelconque des revendications précédentes, dans lequel les particules d'oxyde de silicium comprennent du silicium cristallin et de l'oxyde de silicium non cristallin.

5. Matériau actif négatif selon l'une quelconque des revendications précédentes, dans lequel la concentration du silicium cristallin croît en direction de la surface de la particule.

6. Matériau actif négatif selon l'une quelconque des revendications précédentes, dans lequel la distance depuis la surface de la particule jusqu'à la profondeur à laquelle la concentration de silicium est de 55 % va de 100 nm à 1000 nm.

7. Matériau actif négatif selon l'une quelconque des revendications précédentes, dans lequel le diamètre de particule moyen des particules d'oxyde de silicium est de 0,1 µm à 100 µm.

8. Matériau actif négatif selon l'une quelconque des revendications précédentes, dans lequel les particules d'oxyde de silicium ont une aire spécifique de 10 à 500 m²/g.

9. Procédé de préparation d'un matériau actif négatif pour batterie au lithium rechargeable selon l'une quelconque des revendications 1 à 8, comprenant :
le traitement thermique de l'oxyde de silicium dans une atmosphère inerte pour former des particules d'oxyde de silicium ;
la dispersion des particules d'oxyde de silicium dans un solvant pour préparer une solution mixte ; et
l'ajout d'un agent de gravure à la solution mixte.

10. Procédé selon la revendication 9, dans lequel l'agent de gravure est ajouté à la solution mixte à un débit de 0,05 à 5 ml/min.

11. Procédé selon la revendication 9 ou la revendication 10, dans lequel le rapport en moles de l'oxyde de silicium dans la solution mixte à la quantité totale d'agent de gravure ajouté est de 10:1 à 1:10.

12. Procédé selon l'une quelconque des revendications 9 à 11, dans lequel l'agent de gravure est choisi dans le groupe constitué par un composé fluoré, un acide, et une combinaison de ceux-ci.

13. Procédé selon l'une quelconque des revendications 9 à 12, dans lequel l'agent de gravure est une solution fluorée ayant une concentration d'ion fluor de 0,5 à 12M ou une solution équivalente ayant la même vitesse de gravure qu'un composé fluoré.

14. Procédé selon l'une quelconque des revendications 9 à 13, dans lequel l'agent de gravure est ajouté de façon que le rapport en volume de la somme du volume du solvant dans lequel les particules d'oxyde de silicium sont dispersées et du solvant supplémentaire dans lequel l'agent de gravure est contenu, au volume de l'agent de gravure varie de 1:1 à 30:1.

15. Batterie au lithium rechargeable comprenant :
une électrode négative comprenant le matériau actif négatif selon l'une quelconque des revendications 1 à 8 ;
une électrode positive comprenant un matériau actif positif ; et
un électrolyte non aqueux.
